# EUROPÄISCHE PATENTANMELDUNG

(11) **EP 3 029 161 A1**
(43) Veröffentlichungstag der Anmeldung: **08.06.2016**
(21) Anmeldenummer: 14196065.8
(22) Anmeldetag: 03.12.2014
(51) Int. Cl.: C21D 1/10, C21D 9/32, C21D 1/25

(54) **Verfahren zum Induktionshärten eines Werkstücks**

(71) Anmelder: Siemens Aktiengesellschaft, 80333 München (DE)
(72) Erfinder: Ewering, Mara, 48629 Metelen (DE)

(57) **Zusammenfassung**

Die Erfindung betrifft ein Verfahren zum Härten eines Werkstücks, das aus einem Stahl mit einem Kohlenstoffgehalt von wenigstens 0,35 % hergestellt ist, bei dem zumindest ein Bereich einer Randschicht des Werkstücks bis zu einer ersten vorbestimmten Tiefe mittels Induktion gehärtet wird, wobei derselbe Bereich der Randschicht nach dem ersten induktiven Härten erneut mittels Induktion bis zu einer zweiten vorbestimmten Tiefe gehärtet wird, die geringer als die erste vorbestimmte Tiefe ist.

## Beschreibung

Die vorliegende Erfindung betrifft ein Verfahren zum Härten eines Werkstücks, das aus einem Stahl mit einem Kohlenstoffgehalt von wenigstens 0,35 % hergestellt ist, bei dem zumindest ein Bereich einer Randschicht des Werkstücks bis zu einer ersten vorbestimmten Tiefe mittels Induktion gehärtet wird.

Härteverfahren mittels Induktion, bei denen Randschichtbereiche von Werkstücken auf eine Temperatur oberhalb der Austenitisierungstemperatur erhöht und anschließend abgeschreckt werden, sind im Stand der Technik bereits bekannt. Typische Werkstücke, die einem Induktionshärteverfahren unterzogen werden, sind beispielsweise Zahnräder, Kurbelwellen und Ventilstößel, also Bauteile, die während ihres bestimmungsgemäßen Einsatzes wechselnde und/oder stoßartige Belastungen erfahren und/oder deren Oberflächen verschleißanfällig sind.

Beim Induktionshärten wird das zu härtende Werkstück einem elektromagnetischen Feld ausgesetzt, das durch eine Induktionsspule erzeugt wird, durch die Wechselstrom geleitet wird. Durch das entstehende Wechselfeld werden in das Werkstück eine elektrische Wechselspannung und ein entsprechender Wechselstrom induziert, der eine Temperaturerhöhung verursacht. Die Wärmeenergie staut sich aufgrund des so genannten Skineffektes im Bereich der Randschicht des Werkstückes, wobei die Tiefe der Randschicht abhängig ist von der Frequenz sowie den magnetischen und elektrischen Werkstoffeigenschaften. Auf diese Weise wird die Temperatur innerhalb besagter Randschicht auf eine Temperatur oberhalb der Austenitisierungstemperatur erhöht, was mit einer Umwandlung von Ferrit/Perlit zu Austenit einhergeht. Anschließend wird die Temperatur ggf. unter Einsatz eines Abschreckmediums rapide abgesenkt, wobei ein hartes martensitisches Gefüge erhalten bleibt. Nach dem Induktionshärten empfiehlt sich ein Anlassen, um durch das Härten in das Bauteil induzierte Eigenspannungen abzubauen und die Zähigkeit des Werkstückes zu erhöhen. Gleichzeitig ist so auch eine Reduktion der Randschichthärte möglich. Beim Induktionshärten kann zwischen Verfahren, bei denen ein Werkstück in Sequenzen gehärtet wird, dem so genannten Lückenhärten, und Verfahren, bei denen ein Werkstück in einem einzelnen Vorgang vollständig gehärtet wird, dem so genannten Schusshärten, unterschieden werden.

Ein wesentlicher Vorteil des Induktionshärtens besteht zum einen darin, dass Werkstücke lediglich partiell gehärtet werden können. Darüber hinaus lässt sich das Verfahren aufgrund kurzer Erwärmungszeiten mit wenig Zeitaufwand durchführen. Dank der kurzen Erwärmungszeit ist auch die Zunderbildung gering, wodurch die Nachbearbeitung des Werkstücks reduziert wird. Als weitere Vorteile sind ein geringer Verzug des Werkstücks und eine geringe Oxidation zu nennen.

Ein Nachteil des Induktionshärteverfahrens besteht allerdings darin, dass ausgehend von der gehärteten Randschicht ein sehr steiler Härteabfall in Richtung des Werkstückinnern zu verzeichnen ist, was auch nach einem Anlassen unter anderem einen starken Einfluss auf den Eigenspannungsverlauf hat. Im Falle einer Überlagerung mit den während des Werkstückeinsatzes auftretenden Belastungen kann dies Unsicherheiten bezüglich der Bauteilauslegung mit sich bringen, was nicht wünschenswert ist.

Ausgehend von diesem Stand der Technik ist es eine Aufgabe der vorliegenden Erfindung, ein alternatives Verfahren zum induktiven Härten von Werkstücken zu schaffen.

Zur Lösung dieser Aufgabe schafft die vorliegende Erfindung ein Verfahren der eingangs genannten Art, das dadurch gekennzeichnet ist, dass derselbe Bereich der Randschicht nach dem ersten induktiven Härten erneut mittels Induktion bis zu einer zweiten vorbestimmten Tiefe gehärtet wird, die geringer als die erste vorbestimmte Tiefe ist. Auf diese Weise lässt sich das nach dem ersten Induktivhärten erzeugte Härteprofil, also der sich einstellende Härteverlauf von der Außenseite der gehärteten Randschicht in Richtung des Werkstückinnern, durch das zweite Induktivhärten gezielt in gewünschter Weise manipulieren. Beispielsweise lässt sich ein gestuftes Härteprofil erzielen.

Gemäß einer Ausgestaltung der vorliegenden Erfindung werden beim ersten induktiven Härten und beim zweiten induktiven Härten verschiedene Kopplungsabstände zwischen dem Werkstück und einer Induktionsspule und/oder verschiedene Frequenzen gewählt, um bei den beiden Härtungsprozessen unterschiedliche vorbestimmte Tiefen zu realisieren.

Bevorzugt wird der gehärtete Bereich der Randschicht nach dem ersten induktiven Härten angelassen, um durch das Härten in das Bauteil induzierte Eigenspannungen abzubauen und die Zähigkeit des Werkstückes zu erhöhen. Gleichzeitig wird auch die durch das erste induktive Härten erzielte Randschichthärte herabgesetzt.

Vorteilhaft wird der gehärtete Bereich der Randschicht nach dem zweiten induktiven Härten angelassen, wobei die Anlasstemperatur beim Anlassen zwischen den beiden induktiven Härteschritten höher als die Anlasstemperatur beim Anlassen nach dem zweiten induktiven Härten gewählt wird. Auf diese Weise erhält das Bauteil bis zur zweiten vorbestimmten Tiefe eine höhere Härte als im Bereich zwischen der zweiten vorbestimmten Tiefe und der ersten vorbestimmten Tiefe.

Alternativ kann der gehärtete Bereich der Randschicht auch nur nach dem zweiten induktiven Härten angelassen werden. Mit anderen Worten kann auf ein Anlassen zwischen den Härteschritten verzichtet werden.

Gemäß einer Ausgestaltung des erfindungsgemäßen Verfahrens wird der gehärtete Bereich der Randschicht nach dem zweiten induktiven Härten wenigstens einem dritten induktiven Härten unterzogen. Natürlich können sich in Abhängigkeit von dem zu erzielenden Härteprofil weitere Induktionshärtungsschritte anschließen.

Bevorzugt wird der gehärtete Bereich der Randschicht nach dem dritten induktiven Härten angelassen.

Weitere Vorteile und Merkmale der vorliegenden Erfindung werden anhand der nachfolgenden Beschreibung einer Ausführungsform eines erfindungsgemäßen Verfahrens unter Bezugnahme auf die beiliegende Erfindung deutlich. Darin ist
- Figur 1: ein schematisches Ablaufdiagramm eines Verfahrens gemäß einer Ausführungsform der vorliegenden Erfindung;
- Figur 2: eine schematische Ansicht von Härteprofilen einer Randschicht eines Werkstücks, die sich jeweils nach einem ersten induktiven Härten und nach einem sich unmittelbar an das erste induktive Härten anschließenden Anlassen einstellen, und
- Figur 3: eine schematische Ansicht eines Härteprofils der Randschicht des Werkstücks, das sich nach einem zweiten induktiven Härten einstellt.

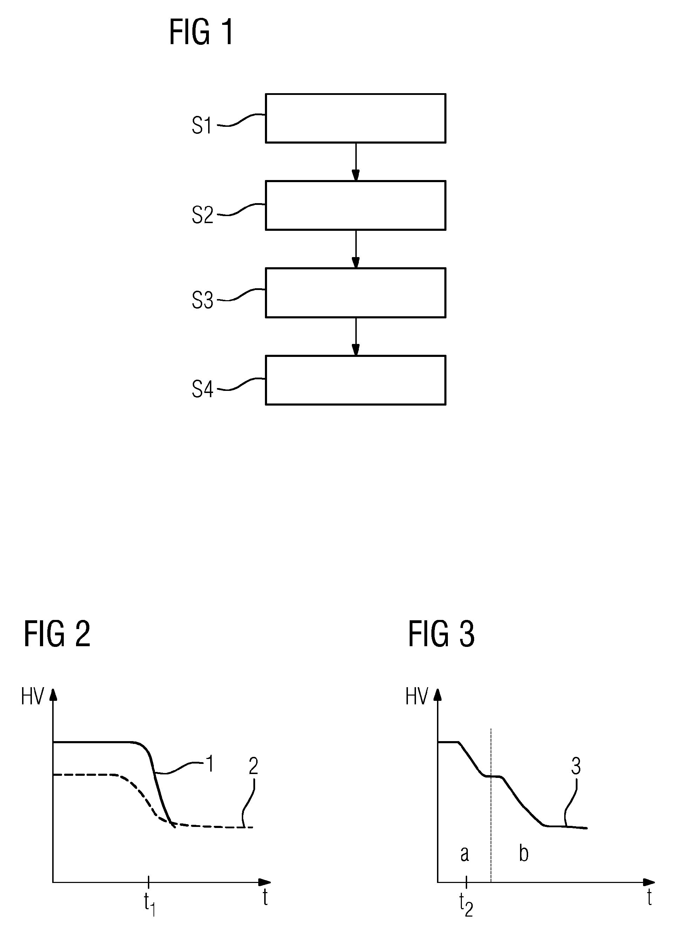

In einem ersten Schritt S1 werden Bereiche einer Randschicht eines Werkstücks, wie beispielsweise eines Zahnrads, das aus einem Stahl mit einem Kohlenstoffgehalt von wenigstens 0,35 % hergestellt ist, bis zu einer ersten vorbestimmten Tiefe t₁ mittels Induktion gehärtet. Hierbei werden die zu härtenden Randschichtbereiche auf eine Temperatur oberhalb der Austenitisierungstemperatur erhöht und anschließend schnell abgekühlt. Das Abkühlen kann beispielsweise unter Verwendung eines Abschreckmediums erfolgen. Grundsätzlich kann auf ein solches Abschrecken aber auch verzichtet werden, wenn die Wärme schnell genug in den Rest des noch kalten Werkstücks abfließen kann. Die Kurve 1 in Figur 1 zeigt schematisch den durch das Induktionshärten erzielten Härteverlauf in Vickers-Härte über die Tiefe t ausgehend von der gehärteten Oberfläche des Werkstückes. Es ist zu erkennen, dass die Härte mit zunehmender Tiefe etwa bis zur Tiefe t₁ zunächst konstant ist und dann rapide abfällt.

In einem weiteren Schritt S2 werden die gehärteten Randschichtbereiche des Werkstückes bei einer Temperatur T₁ angelassen, um durch das Härten in das Werkstück induzierte Eigenspannungen abzubauen, die Zähigkeit des Werkstückes zu erhöhen und die Härte zu reduzieren. Die Kurve 2 in Figur 1 zeigt den Härteverlauf nach Durchführung des Schrittes S2. Die maximale Härte nahe der Randschichtoberfläche hat im Vergleich zur Kurve 1 etwas abgenommen. Der Härteabfall ist zwar etwas sanfter als bei der Kurve 1, jedoch immer noch sehr steil.

In einem weiteren Schritt S3 werden dieselben Bereiche der Randschicht erneut mittels Induktion bis zu einer zweiten vorbestimmten Tiefe t₂ gehärtet, wobei die zweite vorbestimmte Tiefe t₂ geringer als die erste vorbestimmte Tiefe t₁ gewählt ist. Die Veränderung der vorbestimmten Tiefe wird insbesondere durch entsprechendes Variieren der Kopplungsabstände zwischen dem Werkstück und der beim Härten verwendeten Induktionsspule und/oder der Frequenzen erzielt. Auch hier umfasst das Induktionshärten sowohl das Erwärmen der zu härtenden Randschichten auf eine Temperatur oberhalb der Austenitisierungstemperatur als auch ein sich anschließendes schnelles Abkühlen der entsprechenden Randschichtbereiche.

Figur 3 zeigt den Härteverlauf des Werkstückes nach Durchführung des Schrittes S3 anhand der Kurve 3. Es ist zu erkennen, dass durch erneutes Induktionshärten die Härte im Bereich a nahe der Randschicht gegenüber der Kurve 2 erhöht ist. In dem von der Oberfläche der Randschicht entfernten Bereich b entspricht der Verlauf der Kurve 3 dann im Wesentlichen dem Verlauf der Kurve 2. Durch das Induktionshärten in Schritt S3 wird mit anderen Worten ein gestuftes Härteprofil erzielt, was für viele Anwendungsfälle wünschenswert ist.

An den Schritt S3 kann sich ein weiterer Schritt S4 anschließen, bei dem die gehärteten Randschichtbereiche erneut angelassen werden. Hierbei wird die Anlasstemperatur T₂ kleiner als die Anlasstemperatur T₁ gewählt, mit der das Anlassen in Schritt S2 durchgeführt wurde. Auf diese Weise erhält die Randschicht bis zur zweiten vorbestimmten Tiefe t₂ eine höhere Härte als die Randschicht im Bereich von der zweiten vorbestimmten Tiefe t₂ bis zur ersten vorbestimmten Tiefe t₁.

Es sollte klar sein, dass sich weitere Induktionshärtungsschritte sowie weitere Anlassschritte anschließen können, um ein beliebig gestuftes Härteprofil zu erzielen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Härten eines Werkstücks, das aus einem Stahl mit einem Kohlenstoffgehalt von wenigstens 0,35 % hergestellt ist, bei dem zumindest ein Bereich einer Randschicht des Werkstücks bis zu einer ersten vorbestimmten Tiefe (t₁) mittels Induktion gehärtet wird,
**dadurch gekennzeichnet, dass** derselbe Bereich der Randschicht nach dem ersten induktiven Härten erneut mittels Induktion bis zu einer zweiten vorbestimmten Tiefe (t₂) gehärtet wird, die geringer als die erste vorbestimmte Tiefe (t₁) ist.

2. Verfahren nach Anspruch 1,
**dadurch gekennzeichnet, dass** beim ersten induktiven Härten und beim zweiten induktiven Härten verschiedene Kopplungsabstände zwischen dem Werkstück und einer Induktionsspule und/oder verschiedene Frequenzen gewählt werden.

3. Verfahren nach einem der vorhergehenden Ansprüche,
**dadurch gekennzeichnet, dass** der gehärtete Bereich der Randschicht nach dem ersten induktiven Härten und vor dem zweiten induktiven Härten angelassen wird.

4. Verfahren nach Anspruch 3,
**dadurch gekennzeichnet, dass** der gehärtete Bereich der Randschicht nach dem zweiten induktiven Härten angelassen wird, wobei die Anlasstemperatur (T₁) beim Anlassen zwischen den beiden induktiven Härteschritten höher als die Anlasstemperatur (T₂) beim Anlassen nach dem zweiten induktiven Härten gewählt wird.

5. Verfahren nach Anspruch 1 oder 2,
**dadurch gekennzeichnet, dass** der gehärtete Bereich der Randschicht nach dem zweiten induktiven Härten angelassen wird.

6. Verfahren nach einem der vorhergehenden Ansprüche,
**dadurch gekennzeichnet, dass** der gehärtete Bereich der Randschicht nach dem zweiten induktiven Härten wenigstens einem dritten induktiven Härten unterzogen wird.

7. Verfahren nach Anspruch 6,
**dadurch gekennzeichnet, dass** der gehärtete Bereich der Randschicht nach dem dritten induktiven Härten angelassen wird.
